# EUROPÄISCHE PATENTANMELDUNG

(11) **EP 0 687 709 A1**
(43) Veröffentlichungstag der Anmeldung: **20.12.1995**
(21) Anmeldenummer: 95108558.8
(22) Anmeldetag: 03.06.1995
(51) Int. Cl.: C08L 23/16, C08J 9/18

(54) **Polyolefin-Partikelschaum**

(30) Priorität: 13.06.1994 DE 4420590
(71) Anmelder: BASF AKTIENGESELLSCHAFT, D-67056 Ludwigshafen (DE)
(72) Erfinder: Fischer, Joachim, Dr., D-67229 Grosskarlbach (DE)

(57) **Zusammenfassung**

Die Erfindung betrifft Polyolefin-Partikelschaum auf Basis von homogenen Polymermischungen aus Ethylenpolymerisaten bzw. Propylenpolymerisaten. Die Schaumpartikel zeigen zwei Maxima auf der DSC-Kurve, die einen Abstand von mindestens 17^{o}C voneinander aufweisen.

## Beschreibung

Die Erfindung betrifft Polyolefin-Partikelschaum auf Basis von Polymermischungen, sowie ein Verfahren zur Herstellung solcher Schaumpartikel durch Extrudieren einer Polymermischung, Granulieren, Imprägnieren des Granulats mit einem flüchtigen Treibmittel und Verschäumen.

Schaumstoffe auf Basis von Polyolefinen und Olefincopolymeren sind aufgrund ihrer Temperaturbeständigkeit und guten stoßdämpfenden Eigenschaften von großem technischen Interesse. Ihre Herstellung erfolgt in bekannter Weise durch Imprägnieren des Polymeren mit einem flüchtigen Treibmittel bei erhöhter Temperatur unter Druck und Entspannen des Gemisches. Man arbeitet entweder nach dem Extrusionsverfahren oder vorteilhaft nach dem Suspensions-Imprägnierverfahren. Bei letzterem geht man von Polymerpartikeln aus, die in wäßriger Suspension mit dem Treibmittel imprägniert und anschließend zu Schaumstoffpartikeln aufgeschäumt werden. Durch Verschweißen der Schaumstoffpartikel können Formkörper beliebiger Gestalt hergestellt werden.

Es hat sich gezeigt, daß die Schüttdichte der durch Verschäumen der Polymerpartikel hergestellten Schaumstoffpartikel schwierig reproduzierbar ist, d.h., unter praktisch gleichen Bedingungen hergestellte Schaumstoffpartikel zeigen unerwünschte Dichteschwankungen. Darüber hinaus ist das Verarbeitungsspektrum der Schaumstoffpartikel verhältnismäßig eng, d.h., bei der Verarbeitung zu Schaumstoff-Formkörpern durch Einfüllen der Partikel in eine Form unter Druck und Verschweißen durch Einleiten von Wasserdampf müssen die Temperatur- und Druckbedingungen genau festgelegt und konstant gehalten werden, wenn man Formteile mit vorgegebener und reproduzierbarer Dichte erhalten will.

Der Erfindung lag nun die Aufgabe zugrunde, die genannten Nachteile zu vermeiden.

Es wurde gefunden, daß diese Aufgabe gelöst wird, wenn man als Polyolefine Mischungen von zwei oder mehr Olefinpolymerisaten einsetzt, die in der Art und/oder der prozentualen Zusammensetzung der Monomerbausteine voneinander verschieden sind.

Gegenstand der Erfindung ist demzufolge ein Polyolefin-Partikelschaum auf Basis einer Polymermischung von
A. zwei oder mehr Ethylenpolymerisaten A₁ + A₂ + ...,
   oder
B. zwei oder mehr Propylenpolymerisaten B₁ + B₂ + ...,
die jeweils in der Art und/oder der prozentualen Zusammensetzung ihrer Monomerbausteine voneinander verschieden sind, wobei die Polymerisate A₁ + A₂ + ... bzw. B₁ + B₂ + ... eine phasenverträgliche Polymermischung ergeben, und wobei eine DSC-Kurve, die durch Erhitzen von 3 bis 6 mg der Schaumpartikel auf 220^{o}C mit einer Aufheizgeschwindigkeit von 20^{o}C/min mit einem Differentialkalorimeter erhalten wurde, zwei Maxima aufweist, deren Abstand voneinander mindestens 17^{o}C beträgt.

Die Ursachen für das verbesserte Eigenschaftsprofil der erfindungsgemäßen Schaumpartikel liegen einerseits in dem breiten Aufschmelzbereich der Ausgangsgranulate und andererseits in dem im Vergleich zu den Einzelkomponenten deutlich erhöhten Abstand der beiden für die Schaumpartikel charakteristischen Schmelzmaxima. Beide Aspekte führen zu einer Reduktion der Temperatursensitivität und damit zu einer Verbesserung der Reproduzierbarkeit des Imprägnierprozesses und der Formteilherstellung, die bei Dampftemperaturen im Minimum zwischen dem Hoch- und Tieftemperaturprozeß durchgeführt wird.

In der EP-A 147 690 sind vorgeschäumte Partikel beschrieben auf Basis einer Mischung aus einem Propylen/Ethylen-Copolymeren und einem Propylen/1-Buten-Copolymeren mit einem Buten-Gehalt von mindestens 20 mol-%. Derartige Polymermischungen sind zweiphasig, d.h. die Copolymeren ergeben keine phasenverträgliche Polymermischung.

Das gleiche trifft auch auf die Impact-Copolymeren nach EP-A 530 486 zu, die zu Schaumstoff-Partikeln verschäumt werden können. Hier handelt es sich um Mischungen aus einem statistischen Propylen/Ethylen-Copolymeren und einem Blockcopolymeren aus Propylen und 35 bis 65 % Ethylen.

Als Polymermischungen kommen entweder Mischungen von zwei oder mehr Ethylenpolymerisaten A₁ + A₂ + ... oder Mischungen von zwei oder mehr Propylenpolymerisaten B₁ + B₂ + ... in Frage, die jeweils in der Art und/oder der prozentualen Zusammensetzung der Monomerbausteine voneinander verschieden sind. Bevorzugt sollten die DSC-Schmelzmaxima der einzelnen Komponenten der Polymermischung mindestens 5^{o}C, vorzugsweise mindestens 7,5^{o}C und insbesondere mindestens 10^{o}C auseinanderliegen.

Bevorzugte Ethylenpolymerisate A sind statistische Copolymere des Ethylens mit 1 bis 18, vorzugsweise 2 bis 16 Gew.-% eines oder mehrerer α-Olefine mit 3 bis 8 Kohlenstoffatomen. Bevorzugte Propylenpolymerisate B sind Homopolypropylen und statistische Copolymere des Propylens mit bis zu 6 Gew.-% Ethylen oder bis zu 12 Gew.-% eines α-Olefins mit 4 bis 8 Kohlenstoffatomen, sowie statistische Copolymere aus Propylen, Ethylen und einem α-Olefin mit 4 bis 8 Kohlenstoffatomen, bzw. aus Propylen und zwei α-Olefinen mit 4 bis 8 Kohlenstoffatomen.

Besonders bevorzugte Propylenpolymerisate B sind:
Propylen-Homopolymer
Propylen/Ethylen-Copolymer mit 0,5 - 6,
vorzugsweise 1,5 - 6 Gew.-% Ethylen;
Propylen/1-Buten-Copolymer mit 0,5 - 12,
vorzugsweise 2 - 12 Gew.-% 1-Buten
Propylen/1-Hexen-Copolymer
Propylen/1-Octen-Copolymer
Propylen/Ethylen/1-Buten-Copolymer
mit 0,5 - 6, vorzugsweise 1,5 - 6 Gew.-% Ethylen und 0,5 - 6, vorzugsweise 1,5 - 6 Gew.-% 1-Buten
Propylen/Ethylen/1-Hexen-Copolymer
Propylen/Ethylen/1-Octen-Copolymer
Propylen/1-Buten/1-Hexen-Copolymer
Propylen/1-Buten/1-Octen-Copolymer
Propylen/1-Hexen/1-Octen-Copolymer.

Besonders bevorzugte Ethylenpolymerisate A sind:
Ethylen/Propylen-Copolymer mit 1-18, vorzugsweise 2-16 Gew.-% Propylen
Ethylen/1-Buten-Copolymer mit 1-18, vorzugsweise 2-16 Gew.-% 1-Buten
Ethylen/1-Penten-Copolymer mit 1-18, vorzugsweise 2-16 Gew.-% 1-Penten
Ethylen/1-Hexen-Copolymer mit 1-18, vorzugsweise 2-16 Gew.-% 1-Hexen
Ethylen/1-Hepten-Copolymer mit 1-18, vorzugsweise 2-16 Gew.-% 1-Hepten
Ethylen/1-Octen-Copolymer mit 1-18, vorzugsweise 2-16 Gew.-% 1-Octen.

In den Polymermischungen sollten die einzelnen Komponenten in Mengen von mindestens 5, vorzugsweise mindestens 10 und insbesondere mindestens 20 Gew.-%, bezogen auf die Mischung, eingesetzt werden. Mischungen auf Basis von Propylenpolymerisaten enthalten vorzugsweise 10 bis 40 Gew.-% Homopolypropylen.

Besonders bevorzugte Mischungen von Propylenpolymerisaten bestehen aus
- B₁: 90 bis 60 Gew.-% eines Copolymeren von Propylen mit 1 - 6 Gew.-% Ethylen bzw. 1 - 12 Gew.-% 1-Buten,
- B₂: 10 bis 40 Gew.-% Homopolypropylen;
ferner:
- B₁: 90 bis 60 Gew.-% eines Copolymeren des Propylens mit 1 - 6 Gew.-% Ethylen und 1 - 6 Gew.-% 1-Buten,
- B₂: 10 bis 40 Gew.-% Homopolypropylen
- B₁: 20 bis 80 Gew.-% eines Copolymeren des Propylens mit 1 - 6 Gew.-% Ethylen bzw. 1 - 12 Gew.-% 1-Buten
- B₂: 80 bis 20 Gew.-% eines Copolymeren des Propylens mit 1 - 6 Gew.-% Ethylen und 1 - 6 Gew.-% 1-Buten.
sowie
- B₁: 80 bis 20 Gew.-% eines Copolymeren des Propylens mit 1 - 6 Gew.-% Ethylen bzw. 1 - 12 Gew.-% 1-Buten,
- B₂: 10 bis 70 Gew.-% eines Copolymeren des Propylens mit 1 - 6 Gew.-% Ethylen und 1 - 6 Gew.-% 1-Buten
- B₃: 10 bis 30 Gew.-% Homopolypropylen
- B₁: 80 bis 20 Gew.-% einer Mischung aus zwei bzw. drei Copolymeren des Propylens mit 1 - 6 Gew.-% Ethylen bzw. 1 - 12 Gew.-% 1-Buten,
- B₂: 10 bis 70 Gew.-% eines Copolymeren des Propylens mit 1 - 6 Gew.-% Ethylen und 1 - 6 Gew.-% 1-Buten
- B₃: 10 bis 30 Gew.-% Homopolypropylen
- B₁: 80 bis 20 Gew.-% einer Copolymeren mit 1 - 6 Gew.-% Ethylen bzw. 1 - 12 Gew.-% 1-Buten,
- B₂: 10 bis 70 Gew.-% einer Mischung aus zwei bzw. drei Copolymeren des Propylens mit 1 - 6 Gew.-% Ethylen und 1 - 6 Gew.-% 1-Buten
- B₃: 10 bis 30 Gew.-% Homopolypropylen

Die Herstellung der statistischen Copolymeren erfolgt in bekannter Weise durch Copolymerisation der Monomeren mittels Übergangsmetallkatalysatoren.

Die Einzelkomponenten der Polymermischungen sind im allgemeinen linear aufgebaut. Ihr Kristallitschmelzpunkt (DSC-Maximum) liegt bei Ethylenpolymerisaten im allgemeinen zwischen 110 und 135^{o}C; bei Propylenpolymerisaten zwischen 115 und 165^{o}C. Die Schmelzwärme, bestimmt nach der DSC-Methode, liegt vorzugsweise zwischen 30 und 125 J · g⁻¹. Bevorzugt werden Olefinpolymerisate mit einem Schmelzindex MFI (230; 2,16) nach DIN 53 735 von 0,5 bis 30, insbesondere von 2,0 bis 25 g/10 min verwendet.

Die Polymermischungen können durch Mischen der Komponenten in der Schmelze durch Coextrusion und anschließendes Granulieren hergestellt werden (sogenannte Extruderblends). Man kann die Mischungen aber auch herstellen durch Polymerisation der entsprechenden Monomeren in zwei oder mehreren Reaktoren, die in einer Kaskade hintereinander angeordnet sind, Extrusion und Granulieren (sogenannte Reaktorblends).

Es ist ein wesentliches Merkmal der vorliegenden Erfindung, daß eine phasenverträgliche Polymermischung, d.h. ein einphasiges, homogenes System vorliegt. Ist dies nicht der Fall, dann verhalten sich die einzelnen Phasen wie die diskreten Polymeren, d.h., die Zunahme des Abstands der Schmelzpeaks im DSC-Spektrum der Schaumpartikel tritt nicht auf.

Die Polymermischungen können die üblichen Zusatzstoffe in wirksamen Mengen enthalten, wie Farbstoffe, Pigmente, Keimbildner, Stabilisatoren, Flammschutzmittel, Synergisten, Gleitmittel und Antistatika.

Geeignete Treibmittel sind niedrig siedende Halogenkohlenwasserstoffe, anorganische Gase, wie Kohlendioxid, Edelgase oder Stickstoff; vorzugsweise aliphatische Kohlenwasserstoffe mit 3 bis 5 C-Atomen, wie Propan, n-Butan, Isobutan, n-Pentan, Isopentan und/oder Neopentan sowie cyclische Kohlenwasserstoffe, wie Cyclopentan und Cyclohexan. Auch Gemische der genannten Treibmittel können verwendet werden.

Vorzugsweise erfolgt die Herstellung der erfindungsgemäßen Schaumstoffpartikel nach dem Suspensions-Imprägnier-Verfahren. Die Polymermischung wird dazu zweckmäßig in Form von Partikeln mit einem mittleren Durchmesser von 0,5 bis 5 mm, vorzugsweise 0,6 bis 4 mm in wäßriger Suspension mit 0,01 bis 0,5, vorzugsweise 0,03 bis 0,3 kg pro kg des Polymeren, eines Treibmittels bei einer Temperatur, die 40^{o}C unter bis 15^{o}C über, vorzugsweise 5^{o}C über bis 20^{o}C unter dem Kristallitschmelzpunkt (DSC-Maximum) der Polymermischung liegt, unter Druck imprägniert und anschließend unter Aufschäumen entspannt.

Die erhaltenen Schaumstoffpartikel weisen im allgemeinen einen mittleren Durchmesser zwischen 1 und 20 mm und eine Schüttdichte von etwa 0,01 bis 0,2 g · cm⁻³, vorzugsweise 0,01 bis 0,12 g · cm⁻³ auf.

Ein weiteres wesentliches Merkmal der vorliegenden Erfindung besteht darin, daß eine DSC-Kurve, die durch Erhitzen von 3 bis 6 mg der Schaumpartikel auf 220^{o}C mit einer Erhitzungsgeschwindigkeit von 20^{o}C/min mit einem Differentialkalorimeter erhalten wurde, zwei Maxima aufweist, deren Abstand voneinander mindestens 17^{o}C beträgt, vorzugsweise mindestens 20^{o}C, beträgt.

Üblicherweise beträgt der Abstand zwischen Hoch- und Tieftemperatur-Peak bei Polyolefin-Schaumstoffpartikeln nur etwa 5 - 15^{o}C. Größere Abstände werden bei Schaumstoffpartikeln, die aus einem einzigen Olefinpolymerisat aufgebaut sind, nur dann erhalten, wenn man bei der Imprägnierung des Polymerisats mit dem flüchtigen Treibmittel in wäßriger Suspension eine längere Haltezeit (z.B. 1/2 bis 1 Stunde) vorsieht, wie es in den Beispielen der EP-A 123 144 beschrieben ist. Eine solche Haltezeit hat aber unerwünscht lange Zykluszeiten zur Folge.

In der Figur ist die DSC-Kurve der in Beispiel 1 hergestellten Schaumstoff-Partikel aufgezeichnet. Die beiden Maxima sind mit T₁₁ und T₁₂ bezeichnet.

Bei Polyolefin-Partikelschaum diffundiert das Treibmittel häufig aus den Zellen schneller heraus als Umgebungsluft hineindiffundiert. Die Partikel können daher auf bis zu 40 % ihres ursprünglichen Volumens schrumpfen. Sie nehmen ihre ursprüngliche Gestalt wieder an, wenn sie bei Raumtemperatur oder einer erhöhten Temperatur, maximal 20^{o}C unterhalb des Kristallitschmelzpunktes des Copolymeren, mit Luft oder Stickstoff unter einem Überdruck von 0,5 bis 10 bar eine ausreichende Zeit, im allgemeinen 5 bis 500 Minuten, behandelt werden. Die Schaumstoffpartikel können nach bekannten Verfahren durch Erhitzen in porösen oder nicht gasdicht schließenden Formen zu beliebigen Formkörpern verschweißt werden.

Dabei zeigen die erfindungsgemäßen Schaumstoff-Partikel ein günstiges Verarbeitungsspektrum, d.h., beim Formteilherstellungsprozeß wirken sich geringe Druck- und Temperaturschwankungen nicht nachteilig auf die Konstanz der Eigenschaften aus.

Die aus den erfindungsgemäßen Schaumstoff-Partikeln hergestellten Schaumstoff-Formteile haben im allgemeinen eine Dichte von 0,018 bis 0,3 g/cm³, vorzugsweise 0,018 bis 0,20 g/cm³, insbesondere 0,02 bis 0,18 g/cm³. Sie sind überwiegend geschlossenzellig mit einer Zellzahl von 2 bis 1000, vorzugsweise 5 bis 500, insbesondere 10 bis 300 Zellen/mm².

Die in den Beispielen genannten Teile und Prozente beziehen sich auf das Gewicht.

### Beispiele

Folgende Propylenpolymerisate wurden eingesetzt:
- B₁: Homopolypropylen (DSC-Schmelzmaximum 163^{o}C)
- B₂: Copolymer aus Propylen und 2,5 % Ethylen (DSC-Schmelzmaximum 147^{o}C)
- B₃: Copolymer aus Propylen und 4 % Ethylen (DSC-Schmelzmaximum 140^{o}C)
- B₄: Copolymer aus Propylen, 4 % Ethylen und 2 % 1-Buten (DSC-Schmelzmaximum 131^{o}C)

In Tabelle 1 sind einige Polymermischungen aufgeführt.

**Tabelle 1**

| Polymermischung | B₁ [%] | B₂ [%] | B₃ [%] | B₄ [%] | Differenz der Schmelzmaxima [^{o}C] |
|---|---|---|---|---|---|
| 1 | 20 | | | 80 | 32 |
| 2 | | 70 | | 30 | 16 |
| 3 | | 30 | | 70 | 16 |
| 4 | 10 | 80 | | 10 | 16; 16 |
| 5 | 20 | 60 | | 20 | 16; 16 |
| 6 | 30 | 40 | | 30 | 16; 16 |
| 7 | | 20 | 60 | 20 | 7; 9 |
| 8 | 20 | 30 | 30 | 20 | 16; 7; 9 |
| 9 | | 100 | | | - |
| 10 | | 100 | | | - |
| 11 | | | | 100 | - |

Die Polymeren 9, 10 und 11 sind nicht erfindungsgemäß.

Die Polymermischungen in den Beispielen 1 - 8 wurden jeweils hergestellt durch Coextrusion der Einzelkomponenten auf einem Doppelschneckenextruder der Fa. Werner und Pfleiderer. Die dabei eingesetzten Granulate haben ein mittleres Partikelgewicht von ca. 1,5 mg.

### Herstellung der Schaumstoff-Partikel

In einem Autoklaven wurden 100 Teile der Polymermischungen 1 bis 8 bzw. der Polymeren 9 bis 11; 250 Teile Wasser; 3,3 Teile Tricalciumphosphat; 0,1 Teile eines Dispergiermittels und 20 Teile Butan unter Rühren innerhalb von 60 bis 70 min auf die Imprägniertemperatur erhitzt und unmittelbar anschließend - während der Druck im Autoklaven durch Nachpressen von Stickstoff bei 30 bar konstant gehalten wird - durch ein Bodenventil ausgetragen und entspannt (Die Imprägniertemperatur wurde jeweils so gewählt, daß Schaumstoffpartikel mit einer Schüttdichte von etwa 30 g/l erhalten werden) . Die Eigenschaften der Schaumstoffpartikel sind in Tabelle 2 angegeben.

Im Vergleichsbeispiel 10 wurde nach Erreichen der Imprägniertemperatur 1 Stunde bei dieser Temperatur gerührt (Haltezeit).

**Tabelle 2**

| Beispiel mit Polymermischung | Imprägniertemp. [^{o}C] | Schüttdichte [g/l] | T₁₁ ^{[o}C] | T₁₂ [^{o}C] | Δ T [^{o}C] |
|---|---|---|---|---|---|
| 1 | 135,0 | 28,4 | 122,4 | 160,9 | 38,5 |
| 2 | 124,1 | 31,2 | 136,7 | 154,2 | 17,5 |
| 3 | 118,3 | 32,8 | 129,8 | 147,9 | 18,1 |
| 4 | 129,7 | 32,9 | 141,5 | 159,7 | 18,2 |
| 5 | 131,5 | 33,6 | 140,4 | 161,6 | 21,2 |
| 6 | 134,3 | 29,9 | 142,4 | 165,0 | 22,6 |
| 7 | 121,7 | 30,1 | 134,2 | 151,7 | 17,5 |
| 8 | 131,6 | 29,8 | 139,0 | 161,6 | 22,6 |
| 9 | 126,0 | 30,7 | 141,1 | 155,4 | 14,3 |
| 10 | 131,2 | 29,8 | 136,1 | 156,7 | 20,6 |
| 11 | 105,6 | 32,1 | 123,4 | 139,6 | 15,2 |
| T₁₁ = Maximum des Tieftemperatur-Peaks T₁₂ = Maximum des Hochtemperatur-Peaks ΔT = Differenz der Maxima | | | | | |

Beim Beispiel 10 wurde die große Differenz der Maxima nur deshalb erhalten, weil bei der Herstellung der Schaumpartikel eine Haltezeit von 1 Stunde eingelegt wurde.

### Beispiel 12

In einem Autoklaven wurden 100 Teile der Polymermischung 2, 270 Teile Wasser, 3,3 Teile Trikalziumphosphat, 0,1 Teile eines Dispergiermittels und 7,5 Teile Kohlendioxid unter Rühren innerhalb von 65 min auf 145^{o}C erhitzt und anschließend, während der Druck im Autoklaven durch Nachpressen von Stickstoff auf 45 bar konstant gehalten wird, durch ein Bodenventil ausgetragen und entspannt. Es wurden Schaumstoffpartikel der Schüttdichte 55 g/l erhalten. Die Differenz der Schmelzmaxima beträgt 20^{o}C.

### Beispiel 13 (Nachexpandierbare Schaumpartikel)

In einem Autoklaven wurden 100 Teile der Polymermischung 2, 260 Teile Wasser, 3,3 Teile Trikalziumphosphat, 0,1 Teile eines Dispergiermittels und 5 Teile Butan unter Rühren innerhalb von 65 min auf 143^{o}C erhitzt und anschließend - während der Druck im Autoklaven durch Nachpressen von Stickstoff auf 30 bar konstant gehalten wurde - durch ein Bodenventil ausgetragen und entspannt. Es wurden Schaumstoffpartikel der Schüttdichte 52 g/l erhalten. Die Differenz der Schmelzmaxima beträgt 19^{o}C.

Nach einer Zwischenlagerung wurden die Schaumpartikel in einem Druckvorschäumer 4 sec. mit 3,6 bar Wasserdampf behandelt. Dabei expandierten die Schaumstoffpartikel, die außer Luft keine weiteren Treibmittel enthalten, auf eine Schüttdichte von 25 g/l.

## Patentansprüche

1. Polyolefin-Partikelschaum auf Basis einer Polymermischung von
A. zwei oder mehr Ethylenpolymerisaten A₁ + A₂ + ...,
B. zwei oder mehr Propylenpolymerisaten B₁ + B₂ + ...,
die jeweils in der Art und/oder der prozentualen Zusammensetzung ihrer Monomerbausteine voneinander verschieden sind,
dadurch gekennzeichnet, daß die Polymerisate A₁ + A₂ + ... bzw. B₁ + B₂ + ... eine phasenverträgliche Polymermischung ergeben, und daß eine DSC-Kurve, die durch Erhitzen von 3 bis 6 mg der Schaumpartikel auf 220^{o}C mit einer Aufheizgeschwindigkeit von 20^{o}C /min mit einem Differentialkalorimeter erhalten wurde, zwei Maxima aufweist, deren Abstand voneinander mindestens 17^{o}C beträgt.

2. Polyolefin-Partikelschaum nach Anspruch 1, dadurch gekennzeichnet, daß in der Polymermischung die einzelnen Komponenten A₁, A₂ ... bzw. B₁, B₂, ... in Mengen von mindestens 5 Gew.-% enthalten sind.

3. Polyolefin-Partikelschaum nach Anspruch 1, dadurch gekennzeichnet, daß die DSC-Schmelzmaxima der einzelnen Komponenten der Polymermischung sich um mindestens 5^{o}C unterscheiden.

4. Polyolefin-Partikelschaum nach Anspruch 1, dadurch gekennzeichnet, daß die Ethylenpolymerisate A₁, A₂ ... statistische Copolymere des Ethylens mit 1 bis 18 Gew.-% eines oder mehrerer α-Olefine mit 3 bis 8 Kohlenstoffatomen sind.

5. Polyolefin-Partikelschaum nach Anspruch 1, dadurch gekennzeichnet, daß die Propylenpolymerisate B₁, B₂ ... Homopolypropylen, statistische Copolymere des Propylens mit bis zu 6 Gew.-% Ethylen oder bis zu 12 Gew.-% eines α-Olefins mit 4 bis 8 Kohlenstoffatomen, und/oder statistische Copolymere des Propylens mit bis zu 12 Gew.-% zweier verschiedener Comonomerer, ausgewählt aus α-Olefinen mit 4 bis 8 Kohlenstoffatomen und Ethylen, sind.

6. Polyolefin-Partikelschaum nach Anspruch 1, dadurch gekennzeichnet, daß die Schaumpartikel eine Schüttdichte von 0,01 bis 0,2 g · cm⁻³, vorzugsweise von 0,01 bis 0,12 g · cm⁻³, und eine Partikelgröße (längster Durchmesser) von 1 bis 20 mm aufweisen.

7. Verfahren zur Herstellung des Polyolefin-Partikelschaums nach Anspruch 1, dadurch gekennzeichnet, daß man die jeweiligen Olefinpolymerisate A₁ + A₂ + ... bzw. B₁ + B₂ + ... co-extrudiert und granuliert und die Granulate anschließend verschäumt.

8. Verfahren zur Herstellung des Polyolefin-Partikelschaums nach Anspruch 1, dadurch gekennzeichnet, daß man Reaktorblends A₁ + A₂ + ... bzw. B₁ + B₂ + ..., hergestellt durch Copolymerisation der entsprechenden Monomeren in Reaktoren, die in einer Kaskade hintereinander angeordnet sind, extrudiert und granuliert und die Granulate anschließend verschäumt.

9. Verfahren zur Herstellung von Polyolefin-Partikelschaum, dadurch gekennzeichnet, daß man Granulat, welches nach den Ansprüchen 7 oder 8 hergestellt wurde, in wäßriger Suspension mit einem flüchtigen Treibmittel bei einer Temperatur, die 40^{o}C unter bis 15^{o}C über dem Kristallitschmelzpunkt der Polymermischung A₁ + A₂ + ... bzw. B₁ + B₂ + ... liegt, unter Druck imprägniert und anschließend unter Verschäumen entspannt.

10. Verwendung der Polyolefin-Schaumpartikel nach Anspruch 1 zur Herstellung von Schaumstoff-Formteilen.

## Geänderte Patentansprüche

### Geänderte Patentansprüche gemäss Regel 86(2) EPÜ.

Polyolefin-Partikelschaum auf Basis einer Polymermischung von zwei oder mehr Propylenpolymerisaten B₁ + B₂ + ...,
die in der Art und/oder der prozentualen Zusammensetzung ihrer Monomerbausteine voneinander verschieden sind,
dadurch gekennzeichnet, daß die Polymerisate B₁ + B₂ + ...
eine phasenverträgliche Polymermischung ergeben, und daß eine DSC-Kurve, die durch Erhitzen von 3 bis 6 mg der Schaumpartikel auf 220°C mit einer Aufheizgeschwindigkeit von 20°C/ min mit einem Differentialkalorimeter erhalten wurde, zwei Maxima aufweist, deren Abstand voneinander mindestens 17°C beträgt.
